# FASCICULE DE BREVET EUROPEEN

(11) **EP 0 818 264 B1**
(45) Date de publication et mention de la délivrance du brevet: **24.03.2004**
(21) Numéro de dépôt: 97401657.8
(22) Date de dépôt: 10.07.1997
(51) Int. Cl.: B23B 51/10

(54) **Outil et procédé d'ébavurage**
Werkzeug und Methode zum Entgraten
Tool and method for deburring

(30) Priorité: 11.07.1996 FR 9608657
(43) Date de publication de la demande: 14.01.1998
(73) Titulaire: Snecma Moteurs, 75015 Paris (FR)
(72) Inventeur: Barbosa Leite, Adélio Joachim, 77670 - Saint Mammes (FR)

(56) Documents cités:
- DE-C- 650 246
- US-A- 3 170 224
- US-A- 3 540 325
- US-A- 4 303 356

## Description

L'invention ressortit à un outil et à un procédé d'ébavurage, dont le but principal est d'ébavurer le bord d'un perçage situé sur la face opposée à l'outil d'une pièce percée.

Elle peut trouver emploi notamment pour des pièces de grande surface ou comprenant une cavité, c'est-à-dire en règle générale pour des pièces qu'il est fastidieux de démonter pour leur faire présenter les deux faces à la machine d'ébavurage porteuse de l'outil ou dont une face est inaccessible. La machine peut être manuelle ou automatique selon l'application.

Un problème auquel on est affronté en voulant usiner sur une face cachée est la difficulté ou l'impossibilité de connaître la position et surtout la direction de cette surface, ce qui a pour conséquence qu'il est impossible de régler la position de l'outil et de ses arêtes coupantes avec précision. L'invention a néanmoins pour objet de proposer un outil qui surmonte ce problème sans être de structure compliquée.

Un outil comprenant les caractéristiques du préambule de la revendication 1 est connu par US-A-3 540 325.

L'outil d'ébavurage proposé ici comprend les caractéristiques de la revendication 1.

L'art antérieur comprend déjà plusieurs outils analogues (on pourra se reporter aux brevets US 2 404 027, 2 438 558 et 3 827 821, DE 67 387, WO 94 20249 et FR 983 476). Notamment selon WO 94 20249, une chape et un outil coupant appartiennent à une tête d'outil amovible, la chape étant fixée à une tige de coupe fixée à une perceuse. Mais le déploiement et la rétraction de l'outil coupant sont commandés par un mécanisme actionné par l'utilisateur et l'orientation de l'outil coupant est bien déterminée par le mécanisme. L'outil coupant ne peut donc tourner ou s'incliner selon la position ou la forme réelle du contour à usiner, ce qui l'expose à des irrégulatités de fonctionnement qui peuvent le faire mal usiner ou le détériorer. L'utilisateur ne peut malheureusement pas ajuster l'orientation de l'outil coupant qu'il ne voit pas, et d'autant moins que l'outil est engagé à travers un perçage et qu'il n'y aurait donc presque pas de latitude pour l'orienter. Il faut donc conclure que les outils existants sont impuissants à garantir des conditions d'usinage satisfaisantes en présentant convenablement l'outil coupant devant le bord à ébavurer. On peut considérer que l'objet essentiel de l'invention est de résoudre ce problème. On dispose que l'onglet utilisé pour ramener l'outil coupant en position rétractée est dégagé de l'outil coupant pendant l'usinage : l'outil coupant pivote alors librement autour de l'axe perpendiculaire à l'axe de rotation de la chape ; il est déployé par les forces centrifuges dès que la chape tourne et prend l'inclinaison désirable sur le bord à ébavurer en touchant celui-ci.

L'invention obtient ces résultats grâce au réglage de position des éléments de l'outil. Cet outil d'ébavurage comprenant ces éléments est caractérisé en ce qu'il comprend une partie fixée à une perceuse, une partie coulissant le long de l'axe de rotation de la perceuse et une partie de réglage de position entre partie fixe et partie coulissante.

Cet outil d'ébavurage s'applique donc à des procédés selon lesquels la chape est enfoncée à travers un perçage, l'onglet étant alors engagé à côté de l'outil coupant, puis l'onglet est dégagé et la chape mise en rotation tout en la tirant pour appliquer l'outil coupant sur le bord du perçage situé sur la face cachée ; quand l'ébavurage est fini, on enfonce de nouveau la chape et on engage de nouveau l'onglet contre l'outil coupant avant de retirer la chape du perçage et de passer à un autre travail.

L'invention va maintenant être décrite plus concrètement à l'aide des figures suivantes, annexées à titre illustratif et non limitatif :
- la figure 1 représente une vue générale de l'outil d'ébavurage,
- la figure 1A illustre un détail de l'outil,
- et les figures 2A à 2D représentent les étapes du procédé.

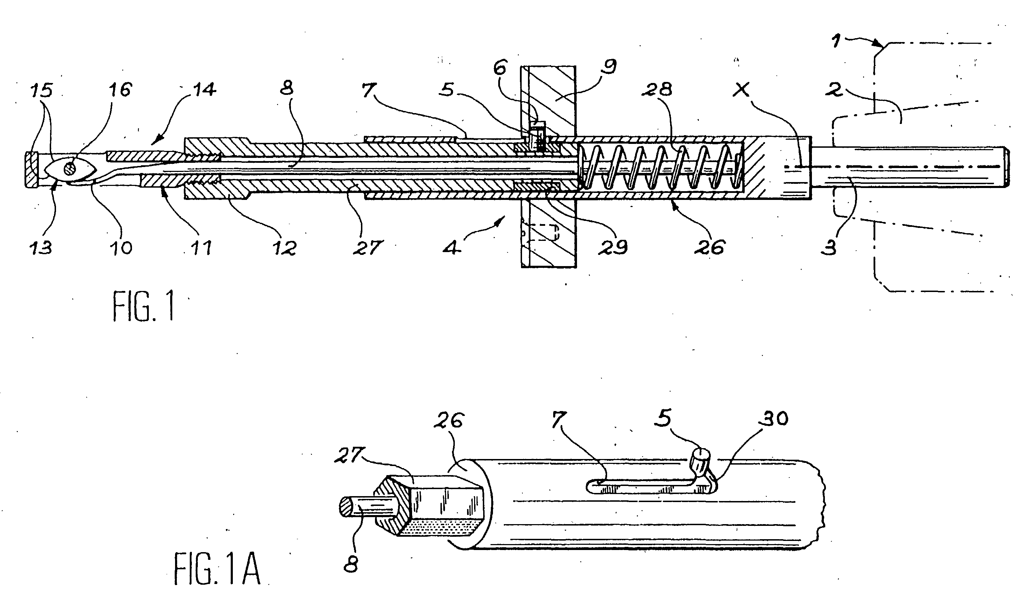

On a ébauché à la figure 1 la représentation d'une perceuse 1 pouvant être manuelle ou automatique d'un genre connu et qui comprend en particulier un mandrin 2 tournant. Le mandrin 2 enserre une hampe 3 à l'arrière de l'outil d'ébavurage et qu'une tige de réglage 4 prolonge vers l'avant.

La tige de réglage 4 est creuse et contient une tringle 8 qui s'étend le long de l'axe longitudinal X de l'outil d'ébavurage (c'est-à-dire son axe de rotation) et dont l'extrémité arrière est fixée à la hampe 3. L'extrémité avant de la tringle 8 se termine en un onglet 10 situé hors de la tige de perçage 4 et dans une chape 11 qui la prolonge. La chape 11 est vissée à un écrou 12 fixé au bout de la tige de perçage 4, et elle porte un outil coupant constitué par une lame 13 ; l'ensemble formé par la lame 13 et la chape 11 forme une tête d'outil 14 amovible et pouvant être remplacée par une autre en fonction de la tâche et en particulier du diamètre du perçage à ébavurer.

On voit que la tige de réglage 4 est composée d'une gaine externe 26 liée à la hampe 3, d'un manchon 27 engagé dans la gaine 26 et d'un ressort 28 entourant la queue de la tringle 8 et comprimé entre les fonds de la gaine externe 26 et du manchon 27, tendant ainsi à faire sortir l'un de l'autre. Le manchon 27 porte l'écrou 12, ainsi qu'une molette 9 qui entoure la gaine externe 26, par l'intermédiaire d'un pion d'arrêt 5 vissé dans une bague 29 du manchon 27 et dont la tête est engagée dans un perçage 6 de la molette 9. De plus, le pion d'arrêt 5 est engagé à travers une rainure 7 traversant la gaine externe 26 et bien visible à la figure 1A.

La lame 13 a une section ovoïde, c'est-à-dire sensiblement plus longue dans une direction que dans l'autre, et des arêtes de coupe 15 sur son périmètre. De plus, elle pivote librement autour d'un axe 16, perpendiculaire à l'axe X, de la chape 11. Un ressort de torsion de faible raideur peut être ajouté si on le souhaite pour assurer son déploiement quand l'onglet 10 est retiré.

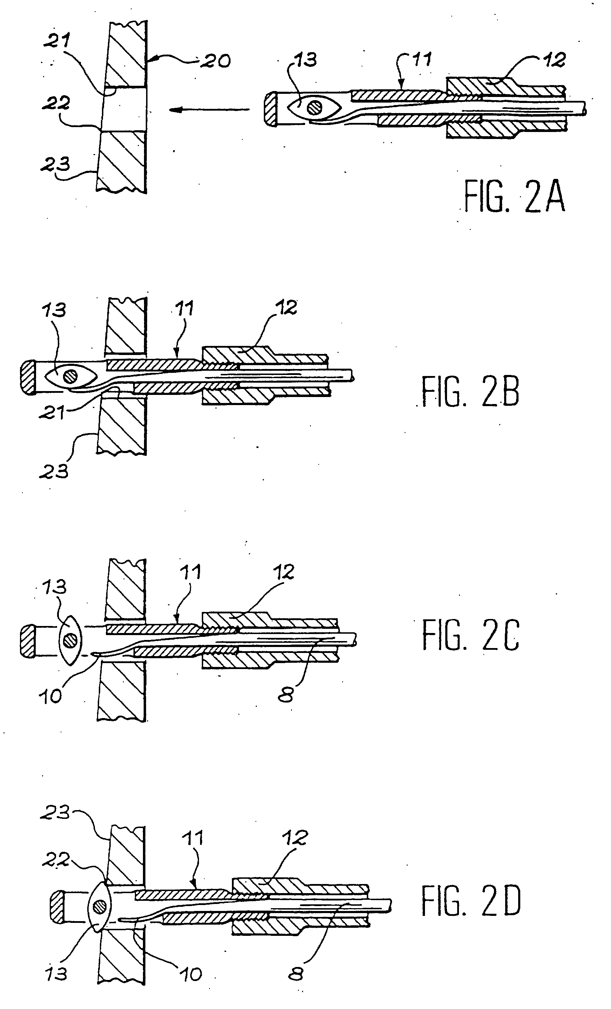

Dans la situation représentée, où la tringle 8 est étendue, l'onglet 10, dont la position est un peu déjetée à côté de l'axe X, s'étend à côté de la lame 13 en s'engageant contre elle, ce qui oriente la direction d'allongement de la lame 13 selon l'axe X et l'escamote dans la chape 11, plus large que ne l'est la lame 13 dans sa direction courte. Dans cet état, l'outil d'ébavurage est approché (figure 2A) d'une pièce 20 traversée d'un perçage 21 dont on veut ébavurer le bord 22 situé sur une face cachée 23, opposée à l'outil, et dont la profondeur et l'inclinaison sont inconnues. Conformément à la figure 2B, la chape 11 est d'abord enfoncée à travers le perçage 21 jusqu'à ce que son extrémité et en particulier la lame 13 dépassent de la face cachée 23 ; puis une rotation de la molette 9 est imposée par l'opérateur, pour placer le pion d'arrêt 5, jusque-là retenu dans une extrémité coudée de la rainure 7, devant la partie principale, axiale, de celle-ci : le ressort 28 peut alors se détendre et repousser le manchon 27 vers l'avant, la tringle 8 et l'onglet 10 restant immobiles, ce qui libère la lame 13, qui prend une position perpendiculaire à celle qu'elle avait auparavant sous l'action des forces d'inertie dès que le mandrin 2 et la tige 4 se mettent à tourner. On voit à la figure 2C que sa direction d'allongement devient alors perpendiculaire à l'axe de rotation X et que la longueur de la lame 13 est suffisante pour qu'elle saille hors de la chape 11. La perceuse 1 est alors tirée en arrière jusqu'à ce que la lame 13 atteigne le bord 22 à ébavurer, contre lequel elle est maintenue jusqu'à ce qu'elle achève le travail souhaité (figure 2D) ; elle prend alors une inclinaison correspondant à celle de la face cachée 23.

L'extraction de l'outil est produite par des opérations inverses consistant à repousser la perceuse 1, à arrêter sa rotation, à tirer la molette 9 pour escamoter la lame 13 contre l'onglet 10 avant de reculer définitivement la perceuse 1.

On remarquera que la bague 29 a pour fonction d'accompagner le mouvement de la molette 9 en tournant dans le manchon 27 sans déplacer ce dernier, car il doit être solidaire en rotation de la gaine externe 26 pour ne pas faire tourner la lame 13 contre l'onglet 10 et surtout pour transmettre la rotation du mandrin 2 : la gaine externe 26 et le manchon 27 peuvent avoir une section polygonale.

## Revendications

1. Outil d'ébavurage, comprenant un outil coupant ovoïde (13), une chape (11) de support de l'outil coupant, rotative autour d'un axe (X) et sur laquelle l'outil coupant pivote autour d'un axe (16) perpendiculaire à l'axe de rotation (X) de la chape, de façon à présenter une direction d'allongement parallèlement ou perpendiculairement à l'axe de rotation (X), et un onglet (10) coulissant dans la chape jusqu'à pouvoir s'engager à côté de l'outil coupant pour le ramener avec la direction d'allongement parallèle à l'axe de rotation (X), l'outil coupant (13) saillant de la chape (11) quand la direction d'allongement est perpendiculaire à l'axe de rotation, l'outil coupant (13) pivotant librement autour de l'axe (16) perpendiculaire à l'axe de rotation (X) de la chape, la chape et l'outil coupant appartenant à une tête d'outil amovible (14), l'onglet (10) appartenant à une tige de coupe (4) fixée à une perceuse (1) et à laquelle la chape (11) est fixée, l'outil comprenant une partie (9, 5, 29) de réglage de position entre partie fixe et partie coulissante, **caractérisé en ce que** l'outil comprend une partie (8) coulissant le long de l'axe de rotation de la perceuse.

2. Outil d'ébavurage selon la revendication 1, **caractérisé en ce que** la partie fixe comprend l'onglet (10) et un ressort (28) est intercalé entre partie fixe et partie coulissante.

3. Outil d'ébavurage selon l'une quelconque des revendications 1 ou 2, **caractérisé en ce que** la partie de réglage de position comprend une molette de commande (9), un pion (5) traversant une rainure (7) coudée établie à travers la partie fixe et une bague (29) tournant dans la partie mobile.

4. Procédé d'ébavurage avec un outil d'ébavurage conforme à l'une quelconque des revendications 1 à 3, **caractérisé en ce qu'**il consiste à enfoncer la chape (11) à travers un perçage (21) d'une pièce (20) à partir d'une face visible de la pièce, l'onglet (10) étant engagé à côté de l'outil coupant (13), à dégager l'onglet (10) et à mettre la chape (11) en rotation, à tirer la chape (11) pour appliquer l'outil coupant (13) sur un bord (22) du perçage (21) situé sur une face (23) de la pièce opposée à l'outil d'ébavurage, puis à enfoncer de nouveau la chape et à engager de nouveau l'onglet contre l'outil coupant avant de retirer la chape du perçage (21).

## Claims

1. Deburring tool comprising an ovoid cutting tool (13), a yoke (11) supporting the cutting tool, able to rotate about an axis (X) and on which the cutting tool pivots about an axis (16) perpendicular to the axis of rotation (X) of the yoke, so as to have a direction of elongation parallel or perpendicular to the axis of rotation (X), and a deflecting tab (10) sliding in the yoke until it can engage beside the cutting tool to return it to the direction of elongation parallel to the axis of rotation (X), the cutting tool (13) projecting from the yoke (11) when the direction of elongation is perpendicular to the axis of rotation, the cutting tool (13) pivoting freely about the axis (16) perpendicular to the axis of rotation (X) of the yoke, the yoke and the cutting tool belonging to a removable cutting head (14), the deflecting tab (10) belonging to a cutting rod (4) fixed to a drill (1) and to which the yoke (11) is fixed, the tool comprising a part (9, 5, 29) for adjusting the relative position of the fixed part and sliding part, **characterized in that** the tool comprises a part (8) sliding along the axis of rotation of the drill.

2. Deburring tool according to Claim 1, **characterized in that** the fixed part comprises the deflecting tab (10) and a spring (28) is inserted between the fixed part and the sliding part.

3. Deburring tool according to either one of Claims 1 and 2, **characterized in that** the position-adjusting part comprises an operating wheel (9), a peg (5) passing through a cranked slot (7) made through the fixed part and a ring (29) rotating in the moving part.

4. Method for deburring using a deburring tool according to any one of Claims 1 to 3, **characterized in that** it consists in driving the yoke (11) through a drilled hole (21) in a workpiece (20) from a visible face of the workpiece, the deflecting tab (10) being engaged beside the cutting tool (13), in disengaging the deflecting tab (10) and setting the yoke (11) in rotation, in pulling the yoke (11) to apply the cutting tool (13) to an edge (22) of the drilled hole (21) situated on a face (23) of the workpiece that is the opposite face to the deburring tool, then in pushing the yoke in again and once again engaging the deflecting tab against the cutting tool before withdrawing the yoke from the drilled hole (21).

## Patentansprüche

1. Werkzeug zum Entgraten mit einem ovalen Schneidwerkzeug (13), mit einer Halterung (11) für das Schneidwerkzeug, die um eine Achse (X) drehbar ist und an der das Schneidwerkzeug um eine Achse (16) dreht, die senkrecht zur Drehachse (X) der Halterung steht, so dass es eine Längsrichtung aufweist, die parallel oder senkrecht zur Drehachse (X) steht, und mit einer Zunge (10), die in der Halterung verschiebbar ist, bis sie seitlich an dem Werkzeug in Eingriff kommen kann, um es mit parallel zur Drehachse (X) liegender Längsrichtung mitzunehmen, wobei das Schneidwerkzeug (13) aus der Halterung (11) hervorsteht, wenn seine Längsrichtung senkrecht zur Drehachse steht, wobei das Schneidwerkzeug (13) frei um die senkrecht zur Drehachse (X) der Halterung stehende Achse (16) dreht, wobei die Halterung und das Schneidwerkzeug (13) zu einem abnehmbaren Werkzeugkopf (14) gehören, wobei die Zunge (10) zu einer Schneidstange (4) gehört, die an einer Bohrmaschine 1 befestigt ist und an der die Halterung (11) befestigt ist, wobei das Werkzeug ein Teil (9, 5, 29) zum Einstellen der Position zwischen feststehendem Teil und verschiebbarem Teil aufweist,
**dadurch gekennzeichnet,**
**dass** das Werkzeug ein an der Drehachse der Bohrmaschine entlang verschiebbares Teil (8) aufweist.

2. Werkzeug zum Entgraten nach Anspruch 1,
**dadurch gekennzeichnet,**
**dass** das feste Teil die Zunge (10) aufweist, und eine Feder (28) zwischen dem festen Teil und dem verschiebbaren Teil angebracht ist.

3. Werkzeug zum Entgraten nach einem der Ansprüche 1 oder 2,
**dadurch gekennzeichnet,**
**dass** das Teil zum Einstellen der Position aus einem Steuerrädchen (9), einem Haltestift (5), der durch eine umgebogene Rille (7) ragt, die durch das feste Teil durchgehend ausgeführt ist, und einem Ring (29), der in dem verschiebbaren Teil dreht, besteht.

4. Verfahren zum Entgraten mit einem Werkzeug zum Entgraten nach einem der Ansprüche 1 bis 3,
**dadurch gekennzeichnet,**
**dass** es darin besteht, die Halterung (11) von der sichtbaren Seite eines Werkstücks (20) aus durch eine Bohrung (21) in diesem Werkstück (20) zu stecken, wobei die Zunge (10) sich an der Seite des Schneidwerkzeugs (13) in Eingriff befindet, dann die Zunge (10) abzulösen und die Halterung (11) in Drehbewegung zu versetzen, die Halterung (11) zurückzuziehen, um das Schneidwerkzeug (13) an einen Rand (22) der Bohrung (21), der sich auf einer vom Entgratungswerkzeug abgewandten Seite (23) des Werkstücks befindet, heranzubringen, und schließlich die Halterung (11) wieder hineinzuschieben und die Zunge wieder an dem Schneidwerkzeug in Eingriff zu bringen, bevor die Halterung aus der Bohrung (21) zurückgezogen wird.
